# EUROPÄISCHE PATENTSCHRIFT

(11) **EP 1 116 531 B1**
(45) Veröffentlichungstag und Bekanntmachung des Hinweises auf die Patenterteilung: **23.03.2005**
(21) Anmeldenummer: 00128374.6
(22) Anmeldetag: 22.12.2000
(51) Int. Cl.: B21D 51/52, B21D 5/00, A47B 77/02

(54) **Verfahren zur Herstellung einer Arbeitsplatte mit angefasten Kanten**
Method of making workplates with bevelled edges
Procédé de fabrication de tôles à bords biseautes

(30) Priorität: 17.01.2000 DE 10001654
(43) Veröffentlichungstag der Anmeldung: 18.07.2001
(73) Patentinhaber: bulthaup GmbH & Co. Küchensysteme, 84153 Aich (DE)
(72) Erfinder: Baier, Raimund, 91180 Heideck (DE); Langer, Otto, 84494 Neumarkt-St. Veit (DE); Haberl, Thomas, 85356 Freising/Attaching (DE)
(74) Vertreter: Laufhütte, Dieter, Dr.-Ing.

(56) Entgegenhaltungen:
- EP-A- 0 249 592
- DE-A- 1 962 441
- DE-C- 707 457
- DE-U- 29 904 124
- US-A- 1 440 615
- US-A- 5 976 670

## Beschreibung

Die Erfindung betrifft ein Verfahren zur Herstellung einer vorzugsweise aus Edelstahl bestehenden Arbeitsplatte, vorzugsweise einer Küchenarbeitsplatte.

Küchenarbeitsplatten mit einer Edelstahloberfläche werden bereits in großem Umfang eingesetzt. Diese vorbekannten Arbeitsplatten bestehen aus einem Unterbau mit Blechabdeckung, der üblicherweise aus einem Holzwerkstoff, beispielsweise einer Preßspanplatte oder einem Leichtbauwerkstoff besteht. Auf diesem Unterbau ist eine Blechabdeckung des Edelstahlbleches von üblicherweise 1 mm Blechstärke aufgebracht. Im Kantenbereich wird dieses vergleichsweise dünne Blech unter Bildung eines Biegeradius umgebogen. Dabei fallen die Biegeradien vergleichsweise groß aus. Hierdurch entsteht ein unerwünschter ästhetischer Gesamteindruck im Kantenbereich der Arbeitsplatteh.

Aufgabe der Erfindung ist es, ein Verfahren zur Herstellung einer Arbeitsplatte an die Hand zu geben, bei dem auch bei Verarbeitung vergleichsweise dicker Blechzuschnitte schmale Fasen im Kantenbereich erzielbar sind.

Gemäß einer ersten erfindungsgemäßen Lösung besteht das Verfahren aus folgenden Schritten:
- Herstellung eines Blechzuschnittes,
- Umbiegen des Blechzuschnittes im Kantenbereich um 90° unter so hohem Druck und mittels eines derart dimensionierten Biegewerkzeuges, welches zumindest aus einem Oberwerkzeug und einem Unterwerkzeug besteht, daß eine Kante mit kleinem Biegeradius entsteht,
- Schleifen der Biegekanten zur Erzeugung der Fasen und
- Verbinden der Blechabdeckung mit dem Unterbau aus Holz- oder Leichtbauwerkstoffen.

Die hier angewandte Biegetechnik mittels der eine Matrize bildenden Werkzeuge, nämlich dem Oberwerkzeug und dem Unterwerkzeug, ermöglichen auch bei größeren Blechdicken von ca. 2 mm die Erzeugung einer ästhetisch ansprechenden schmalen Fase, wobei die Übergänge der Fase in die Flächen und des zuvor erzielten kleinen Biegeradius exakt ausführbar sind. Dadurch, daß vergleichsweise dicke Blechdicken verwendet werden können, ist die Arbeitsplatte auch universeller einsetzbar, da beispielsweise heiße Töpfe keinen Schaden mehr auf der Arbeitsplattenoberfläche verursachen. Bei dünnen Oberflächenblechen von beispielsweise nur 1 mm Blechstärke dagegen wölbt sich bei heißen Töpfen das Blech häufig nach oben. Weiterhin führen die dicken Bleche zu einer Verwindungssteifigkeit, einem Stehvermögen und einer Verzugsfreiheit der Arbeitsplatte.

Eine zweite Lösung der eingangs definierten Aufgabe besteht aus folgender Verfahrensabfolge:
- Herstellung eines Blechzuschnittes,
- Einfräsen einer Kerbe im späteren Kantenbereich des Blechzuschnittes,
- Umbiegen des Blechzuschnittes entlang der Kerbe um 90°,
- Verschweißen des Kantenbereichs vom Kanteninneren her,
- Schleifen der Biegekanten zur Erzeugung der Fasen und
- Verbinden der Blechabdeckung mit dem Unterbau aus Holz- oder Leichtbauwerkstoffen.

Durch dieses erfindungsgemäße Verfahren wird eine Alternative zur Erzeugung eines Kantenbereichs mit kleinem Radius zur Verfügung gestellt. Beim Abschleifen dieses kleinen Radiusbereiches entstehen ebenfalls schmale Fasen, die insbesondere unter ästhetischen Gesichtspunkten gewünscht sind. Auch hier lassen sich entsprechend dickere Bleche verarbeiten.

Eine dritte alternative Lösung der eingangs gestellten Aufgabe besteht aus der Kombination folgender Verfahrensschritte zur Herstellung einer vorzugsweise aus Edelstahl bestehenden Arbeitsplatte:
- Herstellung eines Blechzuschnittes,
- stoßweises Anschweißen der Blechränder im Kantenbereich,
- Schleifen der Kanten zur Erzeugung der Fasen und
- Verbinden der Blechabdeckung mit dem Unterbau aus Holz- oder Leichtbauwerkstoffen.

Auch bei dieser Ausführungsform läßt sich eine schmale Fase erzeugen.

Bevorzugte Ausgestaltungen der Erfindung ergeben sich aus den sich an den parallelen Hauptansprüchen anschließenden Unteransprüchen. Demnach können die senkrecht zur Arbeitsplattenoberfläche ausgerichteten Ecken verschweißt und anschließend zur Erzeugung der senkrecht verlaufenden Fase geschliffen werden.

Die untere freie Kante des Blechrandes kann zur Erzeugung einer Fase geschliffen werden. Hierdurch läßt sich eine vergleichsweise schmale Fase erzeugen.

Gemäß einer weiteren Ausführungsvariante kann eine breitere Abschlußfase an der unteren Kante des Blechrandes dadurch erzeugt werden, daß diese untere Kante mittels eines Biegewerkzeuges um einen spitzen Winkel nach innen gebogen wird und daß diese Kante anschließend zur Erzeugung einer Fase geschliffen wird.

Weitere Einzelheiten und Vorteile der Erfindung ergeben sich aus einem in der Zeichnung näher dargestellten Ausführungsbeispiel. Es zeigen:
- Fig. 1:: eine perspektivische Darstellung eines Eckbereichs einer Arbeitsplatte gemäß der vorliegenden Erfindung,
- Fig. 2 und Fig. 3:: eine schematische Darstellung des Eckblechs einer Arbeitsplatte, anhand derer die Vorgehensweise nach dem bisherigen Stand der Technik erläutert wird,
- Fig. 4 bis Fig. 6:: eine schematische Darstellung von jeweils einem Teilbereich eines Deckbleches einer Arbeitsplatte gemäß der vorliegenden Erfindung, wobei anhand der Figurenfolge das erfindungsgemäße Herstellverfahren erläutert wird,
- Fig. 7 bis Fig. 9:: das Detail A gemäß der Fig. 6 im unteren freien Randbereich des Deckblechs einer erfindungsgemäßen Arbeitsplatte in unterschiedlichen Bearbeitungsstufen zur Erzeugung eines angefasten Randabschlusses im unteren Randbereich der Arbeitsplatte,
- Fig. 10 und Fig. 11:: eine schematische Darstellung eines Teils eines Deckblechs einer Arbeitsplatte gemäß der vorliegenden Erfindung in unterschiedlichen Bearbeitungsstufen zur Erläuterung eines alternativen erfindungsgemäßen Herstellverfahrens und
- Fig. 12:: eine schematische Darstellung eines Deckbleches einer erfindungsgemäßen Arbeitsplatte zur Erläuterung des erfindungsgemäßen Herstellverfahrens gemäß einer dritten Alternative.

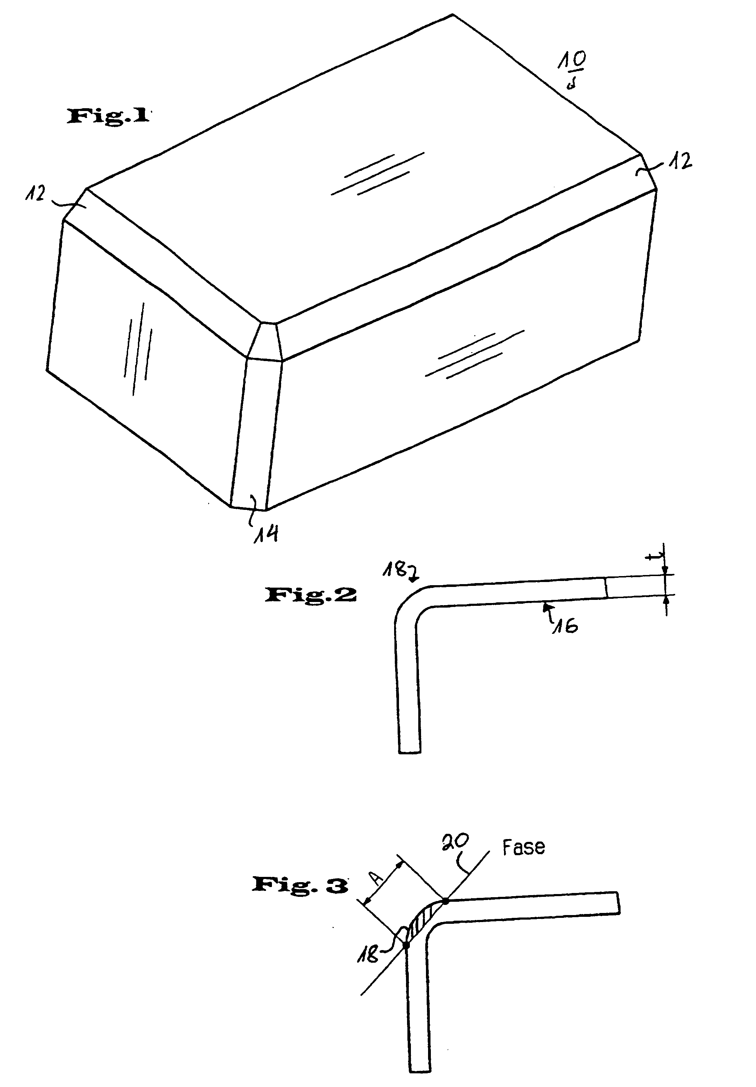

In Fig. 1 ist ein Eckbereich einer Arbeitsplatte 10 gemäß der vorliegenden Erfindung dargestellt. Diese Arbeitsplatte ist durch Fasen 12 und 14 im Kantenbereich gekennzeichnet. Die Arbeitsplatte besteht im wesentlichen aus einer Edelstahloberfläche und einem Unterbau unterhalb der Blechabdeckung, der hier nicht näher dargestellt ist und der beliebig aus Holzwerkstoffen, Leichtbauwerkstoffen oder sonstigen Baustoffen bestehen kann.

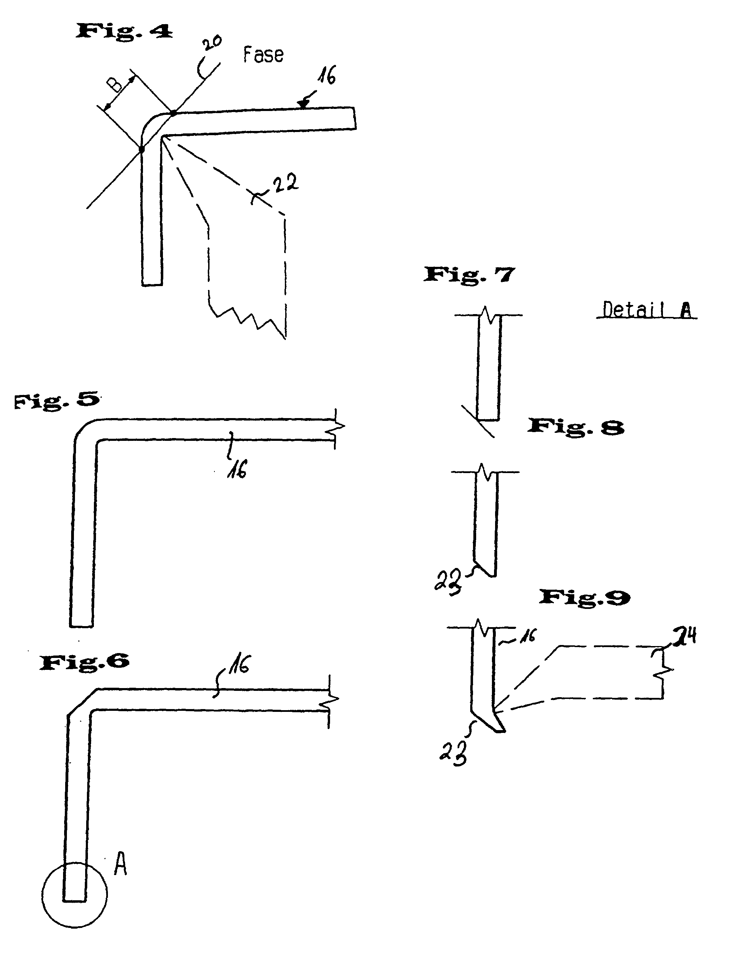

Anhand der Figuren 2 und 3 wird ein bereits bekanntes Herstellverfahren zur Herstellung der Blechabdeckung der Arbeitsplatte dargestellt. Zunächst wird der zuvor hergestellte Blechzuschnitt 16 im Kantenbereich 18 umgebogen, wobei durch das Umbiegen ein vergleichsweise großer Biegeradius entsteht. Es gilt zur Herstellung einer Fase als bereits bekannt, entlang der Linie 20 gemäß Fig. 3 im Bereich des vergleichsweise großen Biegeradius 18 den schraffierten überstehenden Materialanteil abzuschleifen. Hierdurch entstand eine sehr breite Fase, wobei die Breite der Fase hier in Fig. 3 mit A angegeben ist. Bei dem bekannten Verfahren konnten nur vergleichsweise dünne Blechstärken mit einer Dicke von t=1mm verarbeitet werden.

Anhand der Figuren 4 bis 6 kann nun der erfindungsgemäße Unterschied des Herstellverfahrens für die Arbeitsplatte erläutert werden. Hier wird nach Herstellung eines Blechzuschnittes 16 dieser im Kantenbereich um 90° unter so hohem Druck mittels eines hier nur als Unterwerkzeug 22 angedeuteten Biegewerkzeuges gebogen, daß selbst bei vergleichsweise dicken Edelstahlblechen sehr kleine und exakt ausgerichtete Kantenradien erzeugt werden können. Ein Abschleifen entlang der Linie 20 in Fig. 4 ergibt dann eine wesentlich schmalere Fase mit der Breite B, die optisch gegenüber der nach dem Stand der Technik hergestellten Fase wesentlich sauberer erscheint.

In Fig. 5 ist nochmals der kleine Biegeradius dargestellt, während in Fig. 6 die schmale Fase nach der Schleifbehandlung zu sehen ist.

Die Blechzuschnitte können mittels einer Laserschneidanlage hergestellt werden. Das hier nur schematisch dargestellte Biegewerkzeug 22 ermöglicht durch Abstimmung von Unterwerkzeug, Oberwerkzeug, Bombierung und Abkantpresse eine hohe Funktionssicherheit beim Biegen. Mittels Ober- und Unterwerkzeug kann in Verbindung mit einem Prägedruch von bis zu 83 t pro m ein Biegeradius von 2,85 mm an der Außenkante erreicht werden. Dieser Biegeradius bezieht sich auf eine Blechdicke von 2 mm. Bekannte Biegeverfahren, wie sie in den Figuren 2 und 3 dargestellt sind, ergeben bei einer entsprechenden Blechdicke Außenradien von 3,7 bis 4,5 mm, wobei hier insbesondere der Biegeradius nicht sehr konstant ausfällt.

Aufgrund des erreichten kleinen Biegeradius von nur 2,85 mm nach dem neuen Verfahren kann durch nachfolgendes Schleifen mittels der Schleifaggregate eine Fase von 2,5 bis 3 mm an der Kante der Arbeitsplatte erzeugt werden.

In Fig. 7 ist dargestellt, daß im unteren Kantenbereich des Blechrandes durch Schleifwerkzeuge ebenfalls eine Fase 23 erzeugt werden kann, die in Fig. 8 bereits fertig geschliffen ist. In Fig. 9 ist eine vergleichsweise breitere Fase dadurch erzeugt worden, daß der untere Randbereich des Blechzuschnittes 16 mittels eines Biegewerkzeuges 24 nach innen gebogen wurde.

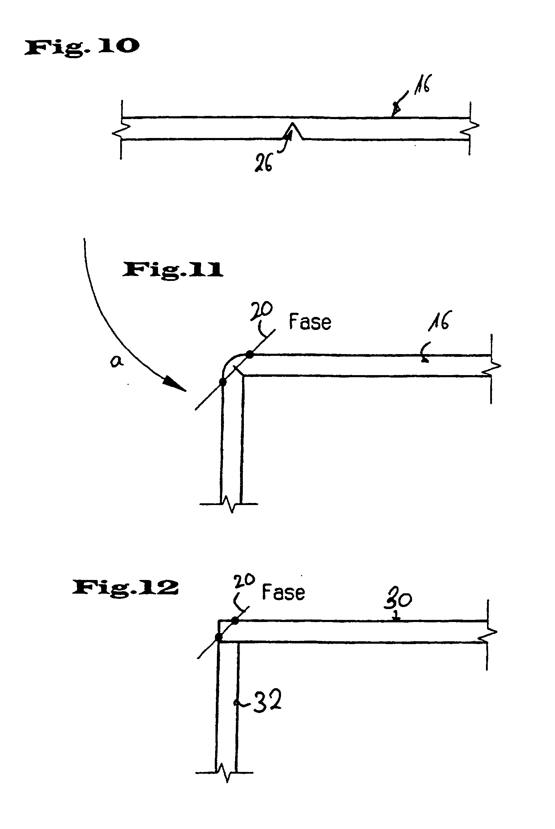

In den Figuren 10 und 11 ist ein alternatives Herstellverfahren gemäß der vorliegenden Erfindung gezeigt. Hier wird im Blechzuschnitt 16, wie in Figur 10 dargestellt, entlang des Biegerandes zunächst eine Kerbe 26 eingefräst und anschließend wird der Blechzuschnitt 16 in Pfeilrichtung a um 90° abgekantet, wie dies in Fig. 11 dargestellt ist. Auch hierdurch wird ein kleiner Radius erzeugt, so daß entlang der Linie 20 wiederum mittels des hier nicht näher dargestellten Schleifwerkzeuges die Fase erzeugt werden kann.

Eine dritte Alternative zur Herstellung einer schmalen Fase im Kantenbereich einer Arbeitsplatte ergibt sich aus der Figur 12. Hier sind die Deckplatte aus Edelstahl 30 und der Randbereich aus Edelstahlblech 32 stoßweise zusammengelegt und miteinander verschweißt, wie dies in Figur 12 dargestellt ist. Es wird dann entlang der Linie 20 mittels eines hier nicht näher dargestellten Schleifwerkzeuges die Fase erzeugt.

Mit dem vorgestellten Verfahren kann eine Arbeitsplatte mit angeschliffenen Fasen hergestellt werden. Dabei können diese Fasen beliebig an einer oder an allen Kanten angebracht werden. Die Höhe und Größe der Arbeitsplatten gemäß der vorliegenden Erfindung kann selbstverständlich beliebig sein. Die neue Verfahrensführung ermöglicht eine ästhetisch kleine Fase, wobei die Übergänge der Fase in die Flächen exakt kantig ausgebildet sind.

In die Arbeitsplatten können bei Bedarf Spülbecken eingeschweißt werden oder im Gußverfahren untergeklebt werden. Insgesamt sind aufgrund des erfindungsgemäßen Verfahrens auch die als Fase auszuführenden Ecken im Randbereich einfacher erstellbar. Es können nach Belieben Arbeitsplattenmodulsysteme erstellt werden, die alle eine formengleiche schmale Fase aufweisen.

## Patentansprüche

1. Verfahren zur Herstellung einer vorzugsweise aus Edelstahl bestehenden Arbeitsplatte mit angefasten Kanten mit folgenden Schritten:
- Herstellung eines Blechzuschnittes (16),
- Umbiegen des Blechzuschnittes im Kantenbereich (18) um 90° unter so hohem Druck mittels eines derart dimensionierten Biegewerkzeuges, welches zumindest aus einem Oberwerkzeug und einem Unterwerkzeug besteht, daß eine Kante mit kleinem Biegeradius entsteht,
- Schleifen der Biegekanten zur Erzeugung der Fasen (20) und
- Verbinden der Blechabdeckung mit dem Unterbau aus Holz- oder Leichtbauwerkstoffen.

2. Verfahren zum Herstellen einer vorzugsweise aus Edelstahl bestehenden Arbeitsplatte mit angefasten Kanten mit folgenden Schritten:
- Herstellung eines Blechzuschnittes (16),
- Einfräsen einer Kerbe (26) entlang des späteren Kantenbereichs des Blechzuschnittes,
- Umbiegen des Blechzuschnittes entlang der Kerbe (26) um 90°,
- Verschweißen der umgebogenen Kante vom Kanteninneren her,
- Schleifen der Biegekanten zur Erzeugung der Fasen (20) und
- Verbinden der Blechabdeckung mit dem Unterbau aus Holz- oder Leichtbauwerkstoffen.

3. Verfahren zur Herstellung einer vorzugsweise aus Edelstahl bestehenden Arbeitsplatte mit angefasten Kanten mit folgenden Schritten:
- Herstellung eines Blechzuschnittes (30, 32),
- stoßweises Anschweißen von Blechrändern im Kantenbereich,
- Schleifen der Kanten zur Erzeugung der Fasen (20) und
- Verbinden der Blechabdeckung mit dem Unterbau aus Holz- oder Leichtbauwerkstoffen.

4. Verfahren nach einem der Ansprüche 1 bis 3, **dadurch gekennzeichnet, daß** die senkrecht zur Arbeitsplattenoberfläche ausgerichteten Ecken verschweißt und anschließend zur Erzeugung der Fase geschliffen werden.

5. Verfahren nach einem der Ansprüche 1 bis 4, **dadurch gekennzeichnet, daß** die untere Kante des Blechrandes zur Erzeugung einer Fase geschliffen wird.

6. Verfahren nach einem der Ansprüche 1 bis 4, **dadurch gekennzeichnet, daß** die untere Kante des Blechrandes mittels eines Biegewerkzeuges um einen spitzen Winkel nach innen gebogen wird und daß diese Kante anschließend zur Erzeugung einer Fase geschliffen wird.

## Claims

1. Method of producing a worktop preferably made of stainless steel and having bevelled edges, comprising the following steps:
- producing a sheet-metal blank (16),
- bending the sheet-metal blank in the edge region (18) by 90° under such a high pressure and by means of a bending tool of such dimensions that an edge having a small bending radius is produced, the bending tool consisting at least of a top tool and a bottom tool,
- grinding the bending edges for producing the bevels (20), and
- connecting the sheet-metal cover to the substructure of wooden or lightweight materials.

2. Method of producing a worktop preferably made of stainless steel and having bevelled edges, comprising the following steps:
- producing a sheet-metal blank (16),
- milling a notch (26) along a subsequent edge region of the sheet-metal blank,
- bending the sheet-metal blank along the notch (26) by 90°,
- welding the bent edge from the edge interior,
- grinding the bending edges for producing the bevels (20), and
- connecting the sheet-metal cover to the substructure of wooden or lightweight materials.

3. Method of producing a worktop preferably made of stainless steel and having bevelled edges, comprising the following steps:
- producing a sheet-metal blank (30, 32),
- butt-welding sheet-metal margins in the edge region,
- grinding the edges for producing the bevels (20), and
- connecting the sheet-metal cover to the substructure of wooden or lightweight materials.

4. Method according to one of Claims 1 to 3, **characterized in that** the corners oriented at right angles to the worktop surface are welded and then ground for producing the bevel.

5. Method according to one of Claims 1 to 4, **characterized in that** the bottom edge of the sheet-metal margin is ground for producing a bevel.

6. Method according to one of Claims 1 to 4, **characterized in that** the bottom edge of the sheet-metal margin is bent inwards by an acute angle by means of a bending tool, and **in that** this edge is then ground for producing a bevel.

## Revendications

1. Procédé de fabrication d'un plan de travail réalisé de préférence en acier fin avec des bords biseautés comprenant les étapes consistant à:
- réaliser une pièce découpée (16) en tôle,
- plier la pièce découpée en tôle dans la zone de bord (18) selon 90° sous une pression tellement élevée au moyen d'un outil de pliage dimensionné de façon, qui est constitué d'au moins un outil supérieur et d'un outil inférieur, qu'un bord avec un petit rayon de courbure soit produit,
- rectifier les bords de pliage pour produire les biseaux (20) et
- assembler le recouvrement en tôle avec la sous-structure en des matériaux de bois ou de construction légère.

2. Procédé de fabrication d'un plan de travail réalisé de préférence en acier fin avec des bords biseautés comprenant les étapes consistant à
- réaliser une pièce découpée en tôle (16),
- fraiser une encoche (26) le long de la zone de bord ultérieure de la découpure en tôle,
- plier la découpure en tôle le long de l'encoche (26) selon 90°,
- souder le bord plié depuis l'intérieur du bord,
- rectifier les bords de pliage pour produire les biseaux (20) et
- assembler le recouvrement en tôle avec la sous-structure en matériau de bois ou de construction légère.

3. Procédé de fabrication d'un plan de travail réalisé de préférence en acier fin avec des bords biseautés comprenant les étapes consistant à:
- réaliser une pièce découpée en tôle (30, 32)
- souder par électropercussion les bords en tôle dans la zone de bord,
- rectifier les bords pour produire les biseaux (20) et
- assembler le recouvrement en tôle avec la sous-structure en matériau de bois ou de construction légère.

4. Procédé selon l'une des revendications 1 à 3, **caractérisé en ce que** les coins orientés perpendiculairement à la surface du plan de travail sont soudés et sont ensuite rectifiés pour produire le biseau.

5. Procédé selon l'une des revendications 1 à 4, **caractérisé en ce que** l'arête inférieure du bord de tôle est rectifiée pour produire un biseau.

6. Procédé selon l'une des revendications 1 à 4, **caractérisé en ce que** l'arête inférieure du bord de tôle est courbée au moyen d'un outil de pliage selon un angle aigu vers l'intérieur, et **en ce que** cette arête est ensuite rectifiée pour produire un biseau.
